# EUROPÄISCHE PATENTSCHRIFT

(11) **EP 1 103 572 B1**
(45) Veröffentlichungstag und Bekanntmachung des Hinweises auf die Patenterteilung: **26.12.2007**
(21) Anmeldenummer: 00124241.1
(22) Anmeldetag: 10.11.2000
(51) Int. Cl.: C08G 18/81, C09D 175/16

(54) **Strahlungshärtbare Isocyanatgruppen enthaltende Urethanacrylate und ihre Verwendung**
Radiation curable isocyanate groups containing urethaneacrylate and its use
Uréthanéacrylate contenant des groupes d'isocyanate photodurcissable et son utilisation

(30) Priorität: 23.11.1999 DE 19956231
(43) Veröffentlichungstag der Anmeldung: 30.05.2001
(73) Patentinhaber: Bayer MaterialScience AG, 51368 Leverkusen (DE)
(72) Erfinder: Weikard, Jan, Dr., 50670 Köln (DE); Fischer, Wolfgang, Dr., 40668 Meerbusch (DE)

(56) Entgegenhaltungen:
- EP-A- 0 549 116
- EP-A- 0 903 363
- EP-A- 0 964 012
- DATABASE WPI Week 9325 Derwent Publications Ltd., London, GB; AN 1993-197590 XP002176793 "One-part dual curing system for electronic applications" & CA 2 073 155 A (KYLE/ GRACE & CO), 17. Januar 1993 (1993-01-17)

## Beschreibung

Die Erfindung betrifft die Verwendung Beschichtungsmittel mit besonders guter Haftung auf Holz.

Durch energiereiche Strahlung härtbare Lacke sind aufgrund des geringeren Energieverbrauchs für die Härtung und ihrer höheren Härtungsgeschwindigkeit gegenüber thermisch härtbaren Lacken von Vorteil. Weiterhin können strahlungshärtbare Lacke lösungsmittelfrei appliziert werden, gegebenenfalls notwendige mitverwendete Reaktivverdünner polymerisieren mit ein. Ein Nachteil der strahlungshärtbaren Lacke insbesondere derjenigen auf Basis ethylenisch ungesättigter Acrylate ist jedoch der hohe Volumenschrumpf bei der Härtung. Durch diesen Schrumpf ist häufig die Haftung zum Untergrund unzureichend, z.B. auf Metallen (Stahlbleche, Kupfer usw.) sowie bestimmten Holzarten.

Es war aus der DE-A 3 616 434 bereits bekannt, dass auch auf schwierigen Holzarten strahlungshärtbare Bindemittel zu gut haftenden Beschichtungen aushärten, wenn der Untergrund zuvor mit einer Grundierung aus Isocyanatgruppen enthaltenden Verbindungen beschichtet worden ist (Haftgrund). Der offensichtliche Nachteil dieses Verfahrens besteht jedoch in einem zusätzlichen Lackierschritt zum Aufbringen der Grundierung. Auch das dem Fachmann bekannte Verfahren, dem Bindemittel einen Anteil an Lackpolyisocyanaten beizumischen, besitzt folgenden Nachteil: es bleiben nach der Härtung durch Strahlung Lackpolyisocyanate frei, die weder an den Untergrund noch im Film gebunden sind und die Härte des Films damit negativ beeinflussen oder den Film verlassen können.

Die US-A 5 234 970 beansprucht eine Zusammensetzung aus a) einer Isocyanatgruppen und ethylenisch ungesättigten Gruppen aufweisenden Verbindung b) reaktiven (Meth)acrylatverdünner und c) gegebenenfalls Photoinitiatoren. Nachteilig ist hier, dass die reaktiven Verdünner b) OH-Gruppen aufweisen, so dass die Zusammensetzung auch ohne Kontakt zu Luftfeuchtigkeit in ihrer Lagerstabilität begrenzt ist.

EP-A 0 126 359 beschreibt die Verwendung von Urethanacrylaten, die keine freien Isocyanatgruppen enthalen, zur Beschichtung von Holz.

Es war daher Aufgabe der vorliegenden Erfindung durch Strahlung härtbare Beschichtungsmittel bereitzustellen, die die genannten Nachteile des Stands der Technik nicht aufweisen.

Es wurde gefunden, dass bestimmte Urethanacrylate, die noch freie Isocyanatgruppen aufweisen, durch UV-Strahlung auf schwierig zu beschichtenden Untergründen wie bestimmten Hölzern, zu gut haftenden Beschichtungen gehärtet werden können. Diese Beschichtungsmittel weisen nahezu keine Hydroxyl-gruppen auf, so dass sie in verschlossenen Gefäßen eine gute Lagerstabilität besitzen.

Gegenstand der Erfindung ist die Verwendung strahlungshärtbarer Beschichtungsmittel aus:
a) 10 bis 100 Gew.-% eines harzartiges Urethan (meth)acrylats, welches sowohl (Meth)-acryloylgruppen als auch freie Isocyanatgruppen aufweist,
b) 0 bis 90 Gew.-% weiterer harzartiges (Meth)acrylate, welche zwar (Meth)acryloylgruppen aber keine freien Isocyanatgruppen und auch keine mit Isocyanaten reaktiven Gruppen aufweisen,
wobei sich die Gew.-% unter a) und b) zu 100 Gew.-% addieren,
zur Beschichtung von Holz.

Verbindungen gemäß a) werden hergestellt aus (Meth)acryloylgruppen aufweisenden einwertigen Alkoholen und Di- oder Polyisocyanaten. Herstellverfahren für Urethan(meth)acrylate sind grundsätzlich bekannt und beschrieben, z.B. in den DE-A 1 644 798, DE-A 2 115 373 oder DE-A 2 737 406. Für die erfindungsgemäßen, freie Isocyanatgruppen aufweisenden Urethan(meth)acrylate ist das Verhältnis von NCO-Gruppen zu OH-Gruppen 1:0,2 bis 1:0,8, vorzugsweise von 1:0,3 bis 1:0,6.

Unter (Meth)acryloylgruppen aufweisenden einwertigen Alkoholen sind sowohl eine freie Hydroxylgruppe aufweisende Ester der Acrylsäure oder Methacrylsäure mit zweiwertigen Alkoholen zu verstehen, wie beispielsweise 2-Hydroxylethyl, 2- oder 3-Hydroxylpropyl oder 2-, 3- oder 4-Hydroxybutyl-(meth)acrylat als auch beliebige Gemische aus derartigen Verbindungen. Außerdem kommen einwertige (Meth)acryloylgruppen aufweisende Alkohole oder im wesentlichen aus derartigen Alkoholen bestehende Umsetzungsprodukte in Betracht, die durch Veresterung von n-wertigen Alkoholen mit (Meth)Acrylsäure erhalten werden, wobei als Alkohole auch Gemische von unterschiedlichen Alkoholen eingesetzt werden können, so dass n für eine ganze oder im statistischen Mittel gebrochene Zahl von größer 2 bis 4, vorzugsweise 3 steht, und wobei pro Mol der genannten Alkohole von (n-0,8) bis (n-1,2), vorzugsweise (n-1) Mol (Meth)Acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen, wie beispielsweise Ethylenglykol oder Propylenglykol mit (ii) (Meth)Acrylsäure im genannten Molverhältnis.

Diese Verbindungen weisen ein Molekulargewicht Mn von 116 bis 1000, vorzugsweise von 116 bis 750 und besonders bevorzugt von 116 bis 158 auf.

Als Di- oder Polyisocyanate sind grundsätzlich aromatische, araliphatische und aliphatische geeignet, wobei aliphatische Verbindungen bevorzugt sind, z.B. Butylendiisocyanat, Hexamethylendiisocynat (HDI), Isophorondiisocyanat (IPDI), Trimethylhexamethylendiisocyanat (=2,2,4 und/oder 2,4,4- Trimethylhexamethylendiisocyanat), Neopentyldiisocyanat, Dicyclohexylmethandiisocyanat oder 4-Isocyanatomethyl-1,8-octandüsocyanat oder deren Derivate mit Urethan-, Isocyanurat, Allophanat-, Biuret-, Uretdion-, Iminooxadiazindionstruktur und Mischungen derselben. Geeignet sind auch Urethangruppen aufweisende Di- oder Polyisocyanate auf Basis von Di- oder Polyisocyanaten und zweiwertigen Alkoholen.

Die Aushärtung (Additionsreaktion) kann in an sich bekannter Weise mittels geeigneter Katalysatoren, wie beispielsweise Zinnoctoat, Dibutylzinndilaurat oder tertiären Aminen beschleunigt werden.

Um die Stabilität der erfindungsgemäßen Beschichtungsmittel zu erhöhen (z.B. gegen vorzeitige Polymerisation, Lagerung), können dem Reaktionsgemisch 0,01 bis 0,3 Gew.-%, bezogen auf das Gesamtgewicht der Reaktanden von an sich bekannten Polymerisationsinihibitoren oder Antioxidantien hinzugefügt. Geeignete derartige Zusatzmittel sind z.B. in "Methoden der organischen Chemie" (Houben-Weyl), 4. Auflage, Band XIV/1, S. 433ff, Georg Thieme Verlag, Stuttgart 1961, beschrieben. Als Beispiele seien Phenole, Kresole und/oder Hydrochinone und Chinone genannt.

In einer bevorzugten Variante wird bei der Herstellung ein sauerstoffhaltiges Gas, bevorzugt Luft, durch die Reaktionsmischung geleitet, um unerwünschte Polymerisaion der (Meth)acrylate zu verhindern.

Bei der unter b) aufgeführten Komponente handelt es sich um (Meth)acrylate, welche zwar (Meth)acryloylgruppen aber keine freien Isocyanatgruppen und keine mit Isocyanaten reaktiven Gruppen aufweisen. Solche Bindemittel sind beispielsweise beschrieben in P.K.T. Oldring (Ed.), Chemistry & Technology of UV & EB Formulations For Coatings, Inks & Paints, Vol. 2, 1991, SITA Technology, London S. 31 - 235. Als Beispiele seien genannt Urethanacrylate, bestimmte Polyesteracrylate und bestimmte Polyetheracrylate.

Weiterhin können die erfindungsgemäßen Bindemittel durch Lösungsmittel verdünnt zum Einsatz kommen. Beispiele für geeignete Lösungsmittel sind Aceton, 2-Butanon, Ethylacetat, n-Butylacetat, Methoxypropylacetat oder niedermolekulare Ester der (Meth)acrylsäure. Bei solchen Mono-, Di oder Oligoestern der (Meth)acrylsäure handelt es sich in der Beschichtungstechnologie bekannte Verbindungen, die als Reaktivverdünner bezeichnet werden und als bei Härtung einpolymerisierende Verbindungen die Viskosität des ungehärteten Lackes senken. Solche Verbindungen sind beschrieben in P.K.T. Oldring (Ed.), Chemistry & Technology of UV & EB Formulations For Coatings, Inks & Paints, Vol. 2, 1991, SITA Technology, London S. 237-235. Als Beispiele seien genannt die Ester der Acrylsäure oder Methacrylsäure, bevorzugt der Acrylsäure mit Mono-, Di-, Tri- und Polyalkoholen. Als einwertige Alkohole (Monoalkohole) sind z.B. die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole geeignet. Weiterhin können alkoxylierte Derivate dieser Alkohole verwendet werden.

Als zweiwertige Alkohole (Dialkohole) sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole geeignet. Bevorzugte zweiwertige Alkohole sind Hexandiol-1,6. Dipropylenglykol und Tripropylenglykol.

Als zweiwertige Alkohole (Dialkohole) sind z.B. Glycerin, als dreiwertige Alkohole (Trialkohole) z.B. Trimethylolpropan oder deren alkoxylierte Derivate geeignet. Bevorzugt wird propoxyliertes Glycerin.

Als mehrwertige Alkohole (Polyalkole) z.B. Pentaerythrit oder Ditrimethylolpropan oder deren alkoxylierte Derivate verwendet werden.

Alle Bestandteile der Komponente b) müssen als Bestandteile der erfindungsgemäßen Beschichtungsmittel frei von unter Herstell- und Lagerbedingungen mit NCO-Gruppen reaktiven Gruppen sein. Beispielsweise bezogen auf Hydroxyl-Gruppen bedeutet das, dass der OH-Gehalt von b) unter 10, bevorzugt unter 5 mg KOH/g sein sollte.

Für die Härtung durch UV-Strahlung kann weiterhin eine Photoinitiatorkomponente c) zugegeben werden. Diese umfasst an sich bekannte Initiatoren, die eine radikalische Polymerisation nach Bestrahlen mit energiereicher Strahlung wie zum Beispiel UV-Licht auslösen können.

Solche Photoinitiatoren sind beispielsweise beschrieben in P.K.T. Oldring (Ed.), Chemistry & Technology of UV & EB Formulations For Coatings, Inks & Paints, Vol. 2, 1991, SITA Technology, London S. 61-325. Bevorzugt werden solche Initiatoren, welche keine gegenüber Isocyanatgruppen reaktiven Gruppen enthalten, beispielsweise Benzildimethylketal und Bisacylphosphinoxide.

Die erfindungsgemäßen Beschichtungsmittel können mit Hilfs- und Zusatzmitteln der unterschiedlichsen Art abgemischt werden. Hierzu gehören Füllstoffe, Pigmente, Farbstoffe, Thixotropiermittel, Glättmittel Mattierungsmittel oder Verlaufsmittel, die in den üblichen Mengen eingesetzt werden.

Das erfindungsgemäße Beschichtungssystem kann, bevorzugt über Spritz-, Gieß- oder Walzapplikation aufgetragen werden.

Die Verwendung des erfindungsgemäßen Beschichtungssystem erfolgt zur Beschichtung von Holz. Besonders gute Ergebnisse im Vergleich zu Systemen nach dem Stand der Technik werden auf Hölzern wie Teak und Mahagoni erhalten.

Die Aushärtung der erfindungsgemäßen Beschichtungen erfolgt:
1. Durch UV-Härtung, geeignet sind handelsübliche Quecksilber-Hoch bzw. Mitteldruckstrahler, diese Strahler können durch andere Elemente dotiert sein und weisen bevorzugt eine Leistung von 80 bis 240 W/cm Lampenlänge auf. Nach UV-Härtung entstehen handhabbare Filme mit festen Oberflächen.
2. Gegebenenfalls durch Vernetzung der NCO-haltigen Bestandteile durch Feuchtigkeit oder mit reaktiven Gruppen des Untergrunds. Dies kann bei Raumtemperatur oder erhöhter Temperatur, vorteilhaft bei 60 bis 150°C erfolgen. Wird auf eine Nachbehandlung bei erhöhter Temperatur verzichtet, stellen sich die Endeigenschaften des Systems erst nach einiger Zeit, ca. 3 bis 7 Tage, ein.

### Beispiele

### 1. Herstellung der Urethanacrylate Bestandteil a)

### Isocyanatgruppen-haltiges Urethanacrylat A:

Von Desmodur^{®} N 3600 (Handelsprodukt Bayer AG, Leverkusen, im wesentlichen HDI-Isocyanurate enthaltendes Polyisocyanat, NCO-Gehalt: 23,4 Gew.-%, Viskosität 1200 mPa.s bei 23°C) werden 552,0 g vorgelegt. Dazu werden 1,6 g 2,6-Di-tert.-butyl-4-methyl-phenol gegeben. Unter Durchleiten von Luft und Rühren wird die Lösung auf 60°C erwärmt. Die Heizquelle wird entfernt und es werden 116,0 g 2-Hydroxyethylacrylat derart zugetropft, dass die Temperatur zwischen 55 und 65°C liegt. Im Anschluss wird bei 60°C weiter umgesetzt, bis der NCO-Gehalt unter 12,5 % liegt. Das resultierende Produkt besitzt eine dynamische Viskosität bei 23°C von 12 Pa.s.

### Isocyanatgruppen-haltiges Urethanacrylat B:

Von Desmodur^{®} HL (Handelsprodukt Bayer AG, Leverkusen, im wesentlichen TDI-und HDI-Isocyanurate enthaltendes Polyisocyanat, NCO-Gehalt: 10,5 Gew.-%, Viskosität 2200 mPa.s bei 23°C und 60 %ig in Butylacetat) werden 418,4 g sowie Butylacetat für 40 % Festgehalt im Produkt vorgelegt. Dazu werden 1,0 g 2,6-Di-tert.-butyl-4-methyl-phenol gegeben. Unter Durchleiten von Luft und Rühren wird die Lösung auf 60°C erwärmt. Die Heizquelle wird entfernt und es werden 81,7 g 2-Hydroxyethylacrylat derart zugetropft, dass die Temperatur zwischen 55 und 65°C liegt. Im Anschluss wird bei 60°C weiter umgesetzt, bis der NCO-Gehalt unter 5,0 % liegt. Das resultierende Produkt besitzt eine dynamische Viskosität bei 23°C von 22 Pa.s.

### 2. Bestandteil b)

Es wurden kommerziell erhältliche Verbindungen verwendet:
Urethanacrylat C: Roskydal^{®} UA VP LS 2265 (Bayer AG Leverkusen, Reaktivverdünner freies aliphatisches Urethanacrylat, Viskosität 800 mPa.s bei 23°C, OH-Gehalt <5 mg KOH/g).
Urethanacrylat C: Roskydal^{®} UA VP LS 2308 (Bayer AG Leverkusen, aliphatisches Urethanacrylat 80 %ig in Hexandioldiacrylat, Viskosität 34000 mPa.s bei 23°C, OH-Gehalt <5mg KOH/g).

### 3. Mischung und Applikation der Lacke:

| **Beispiel** | **NCO-Gruppen haltiges Urethan (meth)acrylat Ziffer/Gew.-Tle** | **NCO-Gruppen freie (Meth)acrylate Ziffer/Gew.-Tle** | **Photoinitiator (Ciba Spezialitätenchemie) Typ/Gew.-Tle** |
|---|---|---|---|
| 1 (nicht erfindungsgemäß) | A / 100 | - | Darocur^{®} 1173/3 |
| 2 (nicht erfindungsgemäß) | A / 50 | D/50 | Darocur^{®} 1173/3 |
| 3 (Vergleich) | - | D / 100 | Darocur^{®} 1173/3 |
| 4 | A / 50 | C / 50 | Darocur^{®} 1173/3 |
| 5 | B / 70 | C / 30 | Darocur^{®} 1173/3 |
| 6 (Vergleich) | - | C / 100 | Darocur^{®} 1173/3 |

Die Formulierungen nach Beispiel 1 und 2 sowie der Vergleich nach Beispiel 3 werden auf unbehandelte Stahlbleche (Unibond^{®} WH/600/OC) in Schichtdicken von 50 µm aufgerakelt. Anschließend wird mittels eines Quecksilber-Hochdruckstrahlers (80 W/cm Lampenlänge) bei einer Bandgeschwindigkeit von 3 m/min gehärtet. Es entstehen kratz- und chemikalienfeste Überzüge. Nach 24 h wird die Haftung auf dem Substrat durch Gitterschnitt/Klebeband-Test bestimmt.

### Ergebnis:

| | |
|---|---|
| Beispiel 1: | Der Lack haftet. Mit dem Klebeband wurde kein Lack vom Stahlblech abgelöst. |
| Beispiel 2: | Der Lack haftet mäßig. Mit dem Klebeband wurde etwas Lack abgelöst. |
| Beispiel 3: (Vergleich) | Der Lack haftet nicht. Mit dem Klebeband wurde der Lack völlig vom Blech gelöst. |

Die erfindungsgemäßen Formulierungen nach Beispiel 4 und 5 und der Vergleich nach Beispiel 6 werden auf Teak-Holzplatten in Schichtdicken von 50 µm aufgerakelt. Anschließend wird mittels eines Quecksilber-Hochdruckstrahlers (80 W/cm Lampenlänge) bei einer Bandgeschwindigkeit von 3 m/min gehärtet. Es entstehen kratz- und chemikalienfeste Überzüge. Nach 24 h wird die Haftung auf dem Substrat durch Gitterschnitt/Klebeband-Test bestimmt.

### Ergebnis:

| | |
|---|---|
| Beispiel 4: | Der Lack haftet. Mit dem Klebeband wurde kein Lack vom Holz abgelöst. |
| Beispiel 5: | Der Lack haftet mäßig bis gut. Mit dem Klebeband wurde etwas Lack abgelöst. |
| Bespiel 6: | (Vergleich) Der Lack haftet schlecht. Mit dem Klebeband wurde der Lack fast völlig vom Holz gelöst. |

## Patentansprüche

1. Verwendung strahlungshärtbarer Beschichtungsmittel aus
a) 10 bis 100 Gew.-% eines harzartigen Urethan(meth)acrylats, welches sowohl (Meth)acryloylgruppen als auch freie Isocyanatgruppen aufweist,
b) 0 bis 90 Gew.-% weiterer harzartiger (Meth)acrylate, welche zwar (Meth)acryloylgruppen aber keine freien Isocyanatgruppen und auch keine mit isocyanaten reaktiven Gruppen aufweisen,
wobei sich die Gew.-% unter a) und b) zu 100 Gew.-% addieren
zur Beschichtung von Holz.

## Claims

1. Use of radiation-curable coating compositions of:
a) 10 to 100 wt.% of a resinous urethane (meth)acrylate which contains both (meth)acryloyl groups and free isocyanate groups,
b) 0 to 90 wt.% of further resinous (meth)acrylates which, while containing (meth)acryloyl groups, contain neither free isocyanate groups nor groups which are reactive with isocyanates,
wherein the weight percentages in a) and b) add up to 100 wt.%, for coating wood.

## Revendications

1. Utilisation de produits de revêtement durcissables sous l'action de rayonnements et consistant en
a) 10 à 100 % en poids d'un uréthane-(méth)acrylate résineux contenant à la fois des groupes (méth)acryloyle et des groupes isocyanates libres,
b) 0 à 90 % en poids d'autres (méth)acrylate résineux contenant effectivement des groupes (méth)acrylolyle mais pas de groupes isocyanates libres ni de groupes réactifs avec les isocyanates,
les pourcentages en poids indiqués sous a) et b) se complétant à 100 % en poids,
pour le revêtement du bois.
